# EUROPÄISCHE PATENTSCHRIFT

(11) **EP 1 309 418 B1**
(45) Veröffentlichungstag und Bekanntmachung des Hinweises auf die Patenterteilung: **01.02.2006**
(21) Anmeldenummer: 01964859.1
(22) Anmeldetag: 19.07.2001
(51) Int. Cl.: B23C 5/20

(54) **SCHNEIDEINSATZ**
CUTTING INSERT
PLAQUETTE DE COUPE

(30) Priorität: 18.08.2000 DE 10040910
(43) Veröffentlichungstag der Anmeldung: 14.05.2003
(73) Patentinhaber: Widia GmbH, 45145 Essen (DE)
(72) Erfinder: SCHWANER, Carsten, 45470 Mülheim (DE); BRAUN, Thomas, 45475 Mülheim (DE)
(74) Vertreter: Vomberg, Friedhelm
(86) Internationale Anmeldenummer: PCT/DE2001/002818
(87) Internationale Veröffentlichungsnummer: WO 2002/014006

(56) Entgegenhaltungen:
- DE-A- 19 743 971
- DE-C- 19 704 931
- US-A- 5 876 160
- US-A- 6 079 912

## Beschreibung

Die Erfindung betrifft einen Schneideinsatz zur spanabhebenden Werkstückbearbeitung mit mehreren Schneidkanten, insbesondere zum Schruppen, wobei zwischen benachbarten Schneidkanten eine gekrümmte oder sich aus einer Vielzahl von jeweils geradlinigen, jeweils stumpfwinklig zueinander angeordneten kurzen Kantenabschnitten zusammensetzenden Schneidecke angeordnet ist.

Solche Schneideinsätze, die ggf. auch eine umlaufende Fase aufweisen können, sind nach dem Stand der Technik bekannt. Um für das kombinierte Schruppen und Schlichten eine hohe Oberflächengüte als Zerspanungsergebnis erreichen zu können, wird in DE 197 03 569 A1 vorgeschlagen, daß die Nebenschneide, an die eine ebene Freifläche angrenzt, konvex gewölbt ist. Der in dieser Druckschrift beschriebene Schneideinsatz kann in einer Draufsicht auf die Spanfläche gesehen insbesondere hexagonal ausgebildet sein, d.h., er besitzt insgesamt sechs gleich lange Schneidkanten, von denen jeweils drei als Hauptschneiden und drei als Nebenschneiden ausgebildet sind. An die Nebenschneide grenzt jeweils auf der Spanfläche eine sich parallel hierzu erstreckende konkave Spanformnut an. Etwa in Höhe der Hauptschneidenmittelsenkrechten und im Abstand zur Hauptschneide ist vorzugsweise ein erhabenes Spanformelement angeordnet, das insbesondere als nasenförmiger Vorsprung eines mittleren erhabenen Spanflächenplateaus ausgebildet sein kann. Dieser Vorsprung kann eine in der Spanflächenplateauebene liegende, im wesentlichen dreieckige ebene Dachfläche aufweisen, deren Spitze auf die Hauptschneide gerichtet ist und von deren an diese Spitze angrenzenden Seitenlinien geneigte Flanken bis auf die Spanfläche hinabreichen, vorzugsweise unter einem Flankenwinkel von 40° bis 50°.

Es ist Aufgabe der vorliegenden Erfindung, den eingangs genannten Schneideinsatz insbesondere für Planfräsarbeiten von Graugußteilen zu optimieren.

Diese Aufgabe wird durch den Schneideinsatz nach Anspruch 1 gelöst, der erfindungsgemäß dadurch gekennzeichnet ist, daß auf der Spanfläche eine Fase angeordnet ist, die sich entlang der Schneidkante erstreckt und daß diese Fase in der Mitte der Schneidkante gegenüber den beidseitig sich anschließenden Fasenbereichen eine 1,5 bis 4fach, vorzugsweise eine 2,5 bis 3,5fach größere Fasenbreite gegenüber der Breite der beidseitig sich anschließenden Fasenbereiche.besitzt. Dieser Schneideinsatz ist insbesondere zum Planfräsen von Grauguß- bzw. Stahlgußwerkstoffen, deren Oberfläche eine Gußhaut besitzt, geeignet. Die Lage der gegenüber den übrigen Bereichen verbreiterten Fase wird so gewählt, daß in dem Bereich der maximalen Schnittiefe aₚₘₐₓ, wo die Schneidkante mit der Gußhaut in Berührung kommt, durch eine verbreiterte Fase die Schneidkante gegen einen vorzeitigen Verschleiß oder Schneidkantenbruch geschützt wird.

Weiterentwicklungen der Erfindung werden in den Unteransprüchen beschrieben.

Vorzugsweise ist die Fasenverbreiterung symmetrisch zur Schneidkantenmitte angeordnet ist. Durch diese Maßnahme können die Schneideinsätze nacheinander für rechts- und linksdrehende Schneidoperationen eingesetzt werden, wobei die verbreiterte Fase stets im mittleren Bereich der Schneidkante angeordnet, also dort, wo entsprechend der gewählten maximalen Schnittiefe die Schneidkante z.B. bei der Motorblockbearbeitung mit der (Oberflächen-)Gußhaut bzw. dem hier angetragenen Span in Berührung kommt. Im schneideckennahen Bereich der Schneidkante kehrt die Fasenbreite zu der kleineren Breite b₁ zurück und läuft zur Schneidecke hin zu der Breite 0 aus, kann jedoch auch als umlaufende Fase mit der Breite b₁ auch in der Schneidecke ausgeführt sein.

Nach einer weiteren Ausgestaltung der Erfindung ist der Fasenwinkel über die gesamte Fase konstant oder ändert sich um maximal ± 10° entlang der Schneidkante. Die Fasenwinkel sind entweder 0° oder kleiner, vorzugsweise liegen sie zwischen - 10° bis -20°.

Der Übergang von der kleineren Fasenbreite zu der größeren Fasenbreite wird bevorzugt derart gewählt, daß sich die verbreiterte Fase zu den weiter von der Schneidkante entfernteren Spanflächenbereichen zu kleineren Längen verjüngt, wobei das Maß der Verjüngung durch die Grenzlinien der verbreiterten Fase bestimmt ist, die zur auf der Spanfläche liegenden Schneidkantenorthogonalen in einem Winkel zwischen 3° und 30°, vorzugsweise zwischen 15° und 25°, angeordnet sind. Diese Schneidkantenverjüngung bzw. die Anordnung der betreffenden Grenzlinien wird bevorzugt ebenfalls spiegelsymmetrisch zur Schneidkantenmitte gewählt. Alternativ sind jedoch auch solche Fasenausbildungen möglich, bei denen zwischen der schmaleren zu der verbreiterten Fase ein kontinuierlicher Übergang der Fasenverbreiterung gewählt wird.

Auf der Spanfläche schließt sich an die verbreiterte Fase rückseitig über ihre gesamte Länge ein erstes Spanformelement mit einer Dachfläche unter einem Winkel von 0° bis -20° an, wobei der Winkel dieser Dachfläche gegenüber den Spanflächenwinkeln der benachbarten Bereiche gleich groß oder größer gewählt ist, vorzugsweise um etwa 10°. Dieses erste Spanformelement fällt beidseitig über ebene Flanken zu der dieses Spanformelement umgebenden Spanfläche ab, wobei vorzugsweise die Flankenneigung zwischen 10° und 30° liegt. Wie die Fasenverbreiterung ist auch dieses erste Spanformelement spiegelsymmetrisch zur Schneidkantenmittelsenkrechten angeordnet.

Vorzugsweise besitzt der Schneideinsatz ein mittleres erhabenes Spanflächenplateau, das im Abstand zu der höchsten Schneidkantenerhebung liegt. Das Spanflächenplateau weist etwa in Höhe der Hauptschneidenmittelsenkrechten im Abstand zur Hauptschneide einen nasenförmigen Vorsprung auf, der vorzugsweise in das erste Spanformelement hineinragt. Der nasenförmige Vorsprung kann eine in der Spanflächenplateauebene liegende, im wesentlichen dreieckige ebene Dachfläche aufweisen, deren Spitze zu der Schneidkante gerichtet ist und von deren an diese Spitze angrenzenden Seitenlinien geneigte Flanken bis auf die Spanfläche bzw. auf das erste Spanformelement hinabreichen, vorzugsweise unter einem Flankenwinkel von 40° bis 50°.

Die zwischen zwei benachbarten Schneidkanten gebildete Schneidecke ist abgerundet oder besteht aus mehreren, jeweils unter einem stumpfen Winkel zueinander und zur jeweiligen angrenzenden Schneidkante bestehenden linearen Teilstücken.

Der Schneideinsatz besitzt eine drei-, vier- oder sechseckige (hexagonale) Form, vorzugsweise mit ober- wie unterseitig angeordneten nutzbaren Schneidkanten.

Die Form der Schneidkanten kann gerade, konkav oder konvex gewölbt sein, wobei die Fase einschließlich der Fasenverbreiterung der jeweiligen Schneidkantenausbildung angepaßt ist bzw. folgt.

Weitere Vorteile und Ausbildungen der Erfindung werden im folgenden anhand der Zeichnungen erläutert. Es zeigen
- Fig. 1: eine perspektivische Ansicht eines erfindungsgemäßen Schneideinsatzes mit einer hexagonalen Grundform,
- Fig. 2: eine Seitenansicht des Schneideinsatzes nach Fig. 1,
- Fig. 3: eine Draufsicht auf den Schneideinsatz nach Fig. 1 und 2,
- Fig. 4: eine Teilschnittansicht entlang der Linie A - A in Fig. 1,
- Fig. 5: eine Teilschnittansicht entlang der Linie B - B in Fig. 3,
- Fig. 6: eine weitere Ausführungsform eines erfindungsgemäßen Schneideinsatzes in einer Teilschnittansicht und
- Fig. 7: eine Teilansicht eines erfindungsgemäßen Schneideinsatzes nach Fig. 1 bis 5 beim Zerspanungseingriff.

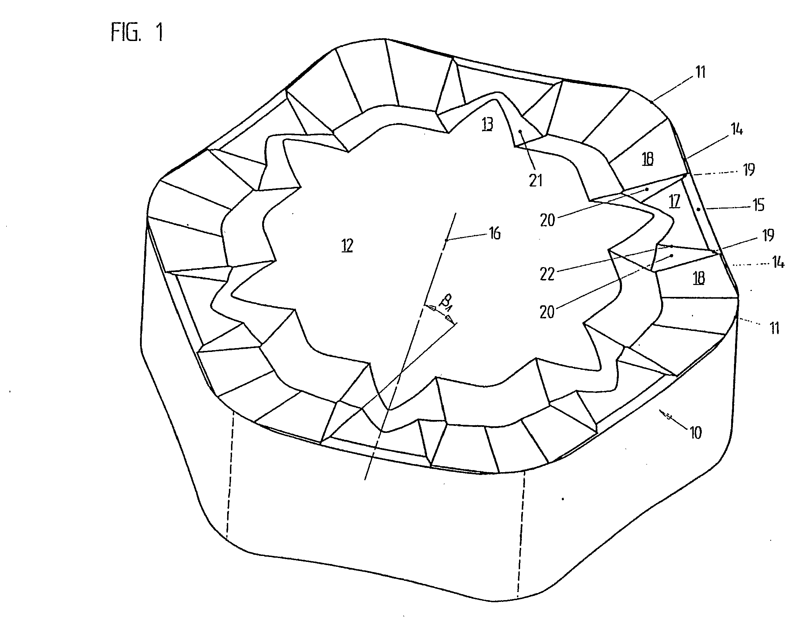

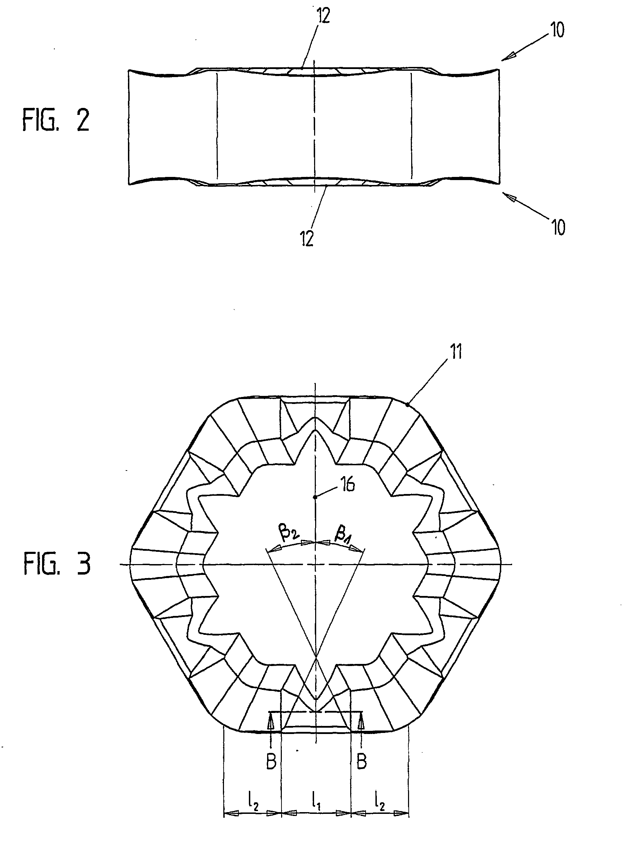

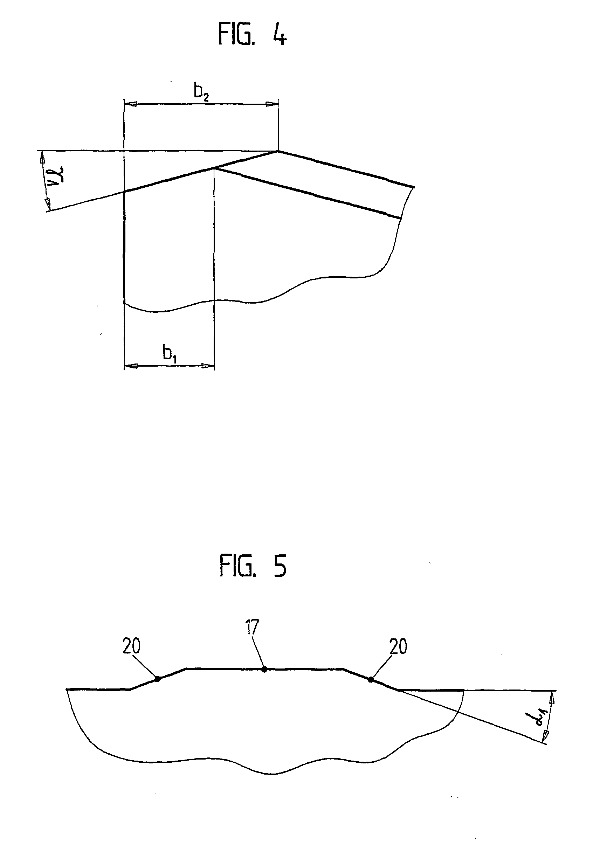

Wie aus Fig. 1 bis 3 hervorgeht, besitzt der Schneideinsatz mit einer regelmäßigen hexagonalen Grundform sechs gleich lange Schneidkanten 10, die zu jeweils benachbarten Schneidkante unter einem stumpfen Winkel von 120° geneigt sind und die über abgerundete Schneidecken 11 jeweils zur benachbarten Schneidkante übergehen. Der Schneideckenradius liegt zwischen 0,3 und 0,9 mm. Der dargestellte hexagonale Schneideinsatz ist als doppelseitig verwendbare Wendeschneidplatte ausgebildet, d.h., er besitzt auf der Ober- wie auf der Unterseite jeweils sechs Schneidkanten. Als Auflagefläche für den Schneideinsatz dient ein ober- wie unterseitig angeordnetes Spanflächenplateau 12, das mehrere nasenförmige Vorsprünge 13 aufweist, deren Spitze jeweils zur Mitte der Schneidkante 10 ausgerichtet ist. An jede der Schneidkanten 10 schließt sich auf der Spanfläche eine Fase an, deren Ausbildung Gegenstand der vorliegenden Erfindung ist. Diese Fase ist nicht, wie bei nach dem Stand der Technik bekannten Schneideinsätzen, entlang der Hauptschneidkante einheitlich ausgebildet, sondern besitzt im mittleren Bereich eine größere Breite. Über eine Länge l₁ (siehe Fig. 3), die etwa 1/3 des von dem Schneideckenscheitelpunkt zum benachbarten Schneideckenscheitelpunkt gemessenen Schneidkantenlänge besitzt, besitzt die Fase eine Breite b₂, die das 1,5 bis 4fache, vorzugsweise das 3fache Maß der Fasenbreite b₁ besitzt, welche die benachbarten Fasen 14 mit einer jeweiligen Länge l₂ haben, die zu der jeweiligen Schneidecke 11 auslaufen. Die verbreiterte Fase 15 ist spiegelsymmetrisch zur Schneidkantenmittelsenkrechten 16 angeordnet, wobei der Fasenwinkel γ₁, der vorzugsweise negativ ist, bei den Fasen 14 und 15 gleich gewählt wird. Das im Ausführungsbeispiel gewählte Fasenwinkelmaß (siehe Fig. 4) beträgt γ₁ = 15°. Das Breitenmaß b₂ beträgt im Ausführungsbeispiel 0,3 mm gegenüber einer Fasenbreite b₁ = 0,1 mm. Rückseitig der verbreiterten Fase 15 schließt sich auf der Spanfläche ein Spanformelement 17 an, das bedingt durch die breitere Fase 15 gegenüber den umliegenden Spanflächenbereichen 18 erhaben ist. Die seitlichen Grenzlinien 19 der verbreiterten Fase 15 sind gegenüber der Mittelsenkrechten um einen Winkel β₁ bzw. β₂ zwischen 15° und 25° geneigt, wobei infolge der zur Mittelsenkrechten 16 gewählten symmetrischen Ausbildung die Winkelmaße β₁ = β₂ sind. Das Spanformelement 17 fällt zu den danebenliegenden Bereichen jeweils über unter einem Winkel α₁ zwischen 10° und 30° geneigte Flanken 20 ab, die eben ausgebildet sind. Im vorliegenden Fall beträgt das Winkelmaß α₁ etwa 25°. Jeder der nasenförmigen Vorsprünge 13 bildet mit dem mittleren erhabenen Plateau 12 eine in einer Ebene liegende Fläche, die als Auflagefläche nutzbar ist. Die Seitenflanken 21 des nasenförmigen Vorsprunges 13 bzw. die entsprechenden übrigen Flanken vom Mittelplateau zu den beim Schnitt wirksamen Spanflächenbereichen sind unter einem Winkel zwischen 40° und 50° angeordnet. Die jeweiligen Grenzlinien 22 des Spanformelementes 17 sind bezogen auf die Mittelsenkrechte 16 ebenso wie die bereits erwähnten Grenzlinien 19 unter einem spitzen Winkel geneigt, wobei das Winkelmaß B₁ bzw. B₂ gleich groß den erwähnten Winkeln β₁ = β₂ ist.

Die erfindungsgemäße Fasenverbreiterung kann insbesondere auch an Schneideinsätzen mit drei oder vier Ecken realisiert werden.

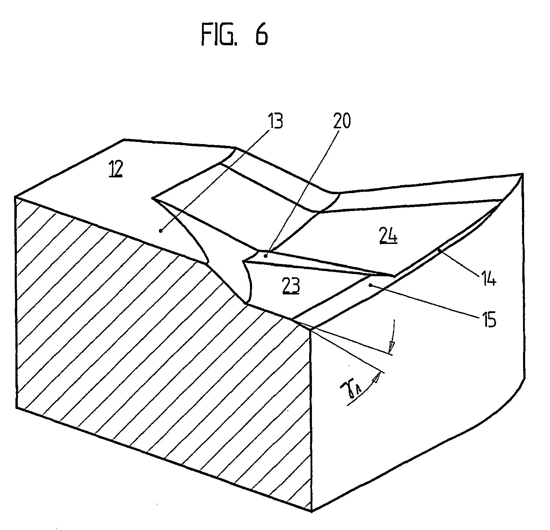

Die Ausgestaltung des Spanformelementes 17 ist ferner Fig. 6 zu entnehmen, bei der auf der Spanfläche rückseitig der verbreiterten Fase 15 ein höher als der Spanflächenabschnitt 24 gelegene Spanflächenabschnitt 23 angeordnet ist, der ggf. auch konkav im Sinne einer nutförmig gewölbten und sich parallel zur Schneidkante erstreckenden Fläche ausgebildet sein kann.

Die Schneidkanten 10 können, wie in den Ausführungsbeispielen dargestellt, geradlinig oder alternativ hierzu (in einer Seitenansicht auf die Freifläche betrachtet) konkav oder konvex ausgebildet sein. Auch in solchen Ausführungsbeispielen schließt sich an die Schneidkante auf der Spanfläche entlang der Schneidkante 10 eine Fase an, die in der Schneidkantenmitte zu einer breiteren Fase 15 unter demselben Fasenwinkel vergrößert ist.

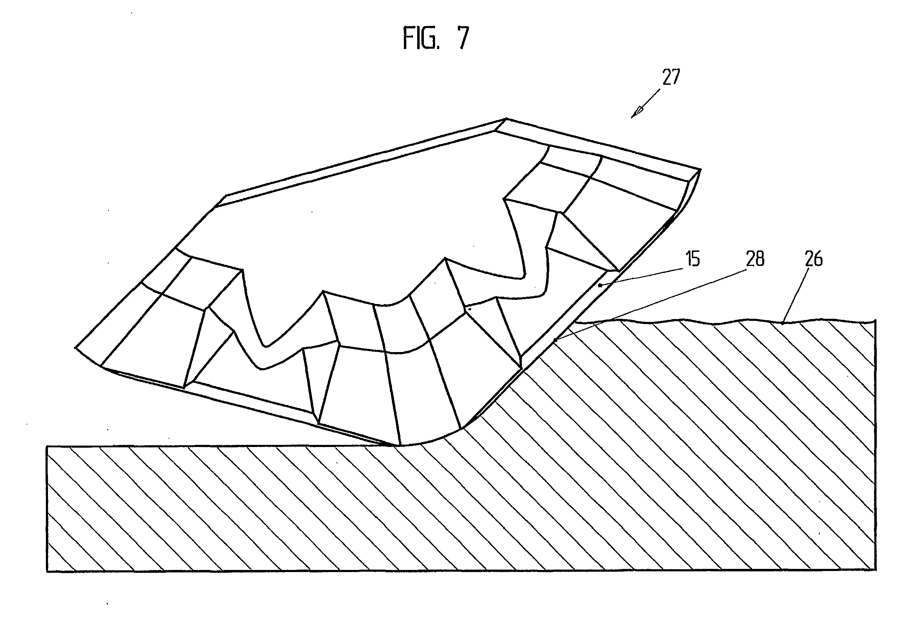

Die Wirkungsweise der erfindungsgemäßen Fasenausgestaltung ist beispielhaft aus Fig. 7 ersichtlich. Bei der Bearbeitung eines Grauguß-Werkstückes 25 mit einer Gußhaut 26 an der Oberfläche greift der Schneideinsatz 27 beim Planfräsen in der in Fig. 7 dargestellten Weise ein. Der mit 28 bezeichnete Schneidkantenteil dient hierbei als Schneide. Im Bereich der maximalen Schnittiefe aₚₘₐₓ, nämlich dort, wo die Schneidkante 28 mit der Gußhaut 26 bzw. den dort abgenommenen Spänen in Berührung kommt, befindet sich die verbreiterte Fase 15, welche die Schneidkante 28 gegen frühzeitigen Verschleiß schützt.

## Patentansprüche

1. Schneideinsatz zur spanabhebenden Werkstückbearbeitung mit mehrere Schneidkanten, insbesondere zum Schruppen, wobei zwischen benachbarten Schneidkanten eine gekrümmte oder sich aus einer Vielzahl von jeweils geradlinigen, jeweils stumpfwinklig zueinander angeordneten kurzen Kantenabschnitten zusammensetzende Schneidecke (11) angeordnet und auf der Spanfläche eine Fase angeordnet ist, die sich entlang der Schneidkante (10) erstreckt
**dadurch gekennzeichnet**,
und daß die Fase in der Mitte der Schneidkante (10).gegenüber den beidseitig sich anschließenden Fasenbereichen (14) eine größere Fasenbreite (b₂) gegenüber der Breite (b₁) der beidseitig anschließenden Fasenbereiche (14) besitzt, wobei die größere Fasenbreite (b₂) 1,5 bis 4, vorzugsweise 2,5 bis 3,5mal so groß wie die Breite der sich seitlich anschließenden Fase ist und daß die Fasenverbreiterung (15) sich über 1/3 bis 1/2 der Länge der Schneidkante (10) erstreckt.

2. Schneideinsatz nach Anspruch 1, **dadurch gekennzeichnet, daß** die Fasenverbreiterung (15) spiegelsymmetrisch zur Schneidkantenmittelsenkrechten (16) angeordnet ist.

3. Schneideinsatz nach einem der Ansprüche 1 oder 2, **dadurch gekennzeichnet, daß** der Fasenwinkel (γ₁) über die gesamte Fase (14, 15) konstant ist oder sich um maximal ± 10° entlang der Schneidkante (10) ändert.

4. Schneideinsatz nach einem der Ansprüche 1 bis 3, **gekennzeichnet durch** einen Fasenwinkel (γ₁) von ≤ 0°, vorzugsweise von -10° bis -20°.

5. Schneideinsatz nach einem der Ansprüche 1 bis 4, **dadurch gekennzeichnet, daß** sich die verbreiterte Fase (15) zu weiter von der Schneidkante (10) entfernten Bereichen zu kleineren Längen verjüngt, wobei das Maß der Verjüngung durch Grenzlinien (19) der verbreiterten Fase (15) bestimmt ist, die zur Schneidkantensenkrechten (16) in einem Winkel (β₁, β₂) zwischen 3° und 30°, vorzugsweise zwischen 15° und 25°, und/oder spiegelsymmetrisch zur Schneidkantenmittelsenkrechten (16) angeordnet sind.

6. Schneideinsatz nach einem der Ansprüche 1 bis 5, **dadurch gekennzeichnet, daß** sich an die verbreiterte Fase (15) über ihre gesamte Länge rückseitig ein erstes Spanformelement (17) mit einer Dachfläche unter einem Winkel von 0° bis -20° angeordnet ist.

7. Schneideinsatz nach Anspruch 6, **dadurch gekennzeichnet, daß** das erste Spanformelement (17) beidseitig über ebene Flanken (20) zu der dieses Spanformelement umgebenden Spanfläche (18) abfällt, wobei vorzugsweise die Flankenneigung (α₁) zwischen 10° und 30° liegt und/oder das erste Spanformelement (17) spiegelsymmetrisch zur Schneidkantenmittelsenkrechten (16) angeordnet ist.

8. Schneideinsatz nach einem der Ansprüche 1 bis 7, **gekennzeichnet durch** ein mittleres erhabenes Spanflächenplateau (12), das im Abstand zu der höchsten Schneidkantenerhebung liegt und das etwa in Höhe der Schneidkantenmittelsenkrechten (16) im Abstand zur Schneidkante (10) einen nasenförmigen Vorsprung (13) aufweist, der vorzugsweise in das erste Spanformelement (17) hineinragt und/oder eine in der Spanflächenplateauebene liegende, im wesentlichen dreieckige ebene Dachfläche aufweist, deren Spitze auf die Schneidkante (10) gerichtet ist und von deren an diese Spitze angrenzenden Seitenlinien geneigte Flanken (21) bis auf die Spanfläche hinabreichen, vorzugsweise unter einem Flankenwinkel von 40° bis 50°.

9. Schneideinsatz nach einem der Ansprüche 1 bis 8, **gekennzeichnet durch** eine im wesentlichen regelmäßige 6-Eck-Form mit sechs Schneidkanten, die die Spanfläche begrenzen, vorzugsweise mit zwei parallel zueinander angeordneten Spanflächen, oder eine drei- oder viereckige Form hat.

10. Schneideinsatz nach einem der Ansprüche 1 bis 9, **dadurch gekennzeichnet, daß** die Schneidkante in einer Draufsicht auf die hieran angrenzende Freifläche konkav oder konvex gewölbt oder geradlinig ausgebildet ist, wobei die Fasenverbreiterung (15) der Ausbildung der Schneidkante folgt.

## Claims

1. Cutting insert for the material-removing machining of a workpiece, in particular for roughing, wherein between neighboring cutting edges cutting corners (11) are positioned that are curved or formed of short straight sections extending at obtuse angles to one another, and a land is provided on the cutting face that extends along the cutting edges (10),
**characterized in that**
the land has at the center of each cutting edge (10) a greater land width (b₂) in relation to the width (b₁) of the land regions (14) adjacent to both sides, whereby the greater land width (b₂) is equal to between 1,5 and 4 times, preferably 2,5 to 3,5 times, the width of the land regions adjacent to both sides and that the land increased in width (15) extends over between ⅓ and ½ of the length of the cutting edge (10).

2. Cutting insert according to claim 1, **characterized in that** the land increased in width (15) is mirror symmetrical to the cutting-edge center perpendicular (16).

3. Cutting insert according to one of claims 1 or 2, **characterized in that** a land angle (γ₁) is constant over the entire land (14, 15) or changes at most ±10° over the length of the cutting edge (10).

4. Cutting insert according to one of claims 1 to 3, **characterized by** a land angle (γ₁) ≤ 0°, preferably between -10° and -20°.

5. Cutting insert according to one of claims 1 to 4, **characterized in that** the land increased in width (15) narrows away from the cutting edges (10), the extent of narrowing being defined by borders (19) of the land increased in width (15) that extend at angles (β₁, β₂) between 3° and 30°, preferably between 15° and 25°, to the cutting-edge center perpendicular (16) and/or that extend mirror symmetrically to the cutting-edge center perpendicular (16).

6. Cutting insert according to one of claims 1 to 5, **characterized in that** a first chip-shaping element (17) with a surface extending at an angle of 0° to -20° extends rearward along the entire length of the land increased in width (15).

7. Cutting insert according to claim 6, **characterized in that** planar flanks (20) extend from both sides of the first chip-shaping element (17) downward to a respective surrounding cutting face (18), preferably at a flank angle (α₁) between 10° and 30° and/or that the first chip-shaping element (17) is mirror-symmetrical to the respective cutting-edge center perpendicular (16).

8. Cutting insert according to one of claims 1 to 7, **characterized in that** a central raised cutting-face plateau (12) is spaced from highest points of the cutting edges and is provided in line with the cutting-edge center perpendicular (16) but spaced to the cutting edge (10) with a nose-shaped projection (13) that preferably projects into the first chip-shaping element (17) and/or that the projections (13) have a generally triangular planar surface lying in the plane of the cutting-face plateau, having a corner pointed at the cutting edge (10) and having side lines adjacent to the corner from where angled flanks (21) extend downwards to the cutting face, preferably at a flank angle between 40° and 50°.

9. Cutting insert according to one of claims 1 to 8, **characterized by** a generally uniform six-sided shape with six cutting edges that define the cutting face, preferably with two parallel cutting faces, or by a three- or four-sided shape.

10. Cutting insert according to one of claims 1 to 9, **characterized in that** the cutting edge is shaped concave, convex, arcuate, or straight seen in top view on the adjacent free face, whereby the land increased in width (15) follows the shape of the cutting edge.

## Revendications

1. Insert de coupe pour l'usinage de pièces par enlèvement de copeaux, comprenant plusieurs tranchants, en particulier pour le dégrossissage, entre des tranchants voisins étant disposé un coin de coupe (11) qui est courbe ou se compose d'une pluralité de courtes sections d'arête respectivement rectilignes et disposées respectivement à angle obtus les unes par rapport aux autres, et sur la face de coupe étant disposé un chanfrein qui s'étend le long du tranchant (10), **caractérisé par le fait que** le chanfrein présente au milieu du tranchant (10), par rapport aux zones de chanfrein (14) adjacentes de part et d'autre, une largeur de chanfrein (b₂) supérieure à la largeur (b₁) des zones de chanfrein (14) adjacentes de part et d'autre, la largeur de chanfrein (b₂) plus importante étant 1,5 à 4, de préférence 2,5 à 3,5 fois plus importante que la largeur des zones de chanfrein adjacentes de part et d'autre, et que le chanfrein élargi (15) s'étend sur une longueur comprise entre 1/3 et ½ de la longueur du tranchant (10).

2. Insert de coupe selon la revendication 1, **caractérisé par le fait que** le chanfrein élargi (15) est disposé à symétrie spéculaire par rapport à la perpendiculaire (16) abaissée au milieu du tranchant.

3. Insert de coupe selon l'une des revendications 1 ou 2, **caractérisé par le fait que** l'angle de chanfrein (γ₁) est constant sur l'ensemble du chanfrein (14, 15) ou varie de ±10° au maximum le long du tranchant (10).

4. Insert de coupe selon l'une des revendications 1 à 3, **caractérisé par** un angle de chanfrein (γ₁) de ≤ 0°, de préférence compris entre -10° et -20°.

5. Insert de coupe selon l'une des revendications 1 à 4, **caractérisé par le fait que**, vers des zones situées plus loin du tranchant (10), le chanfrein élargi (15) se rétrécit de manière à présenter des longueurs plus petites, la mesure du rétrécissement étant déterminée par des limites (19) du chanfrein élargi (15) qui sont disposées à un angle (β₁, β₂) compris entre 3° et 30°, de préférence entre 15° et 25°, par rapport à la perpendiculaire (16) abaissée au milieu du tranchant, et/ou à symétrie spéculaire par rapport à la perpendiculaire (16) abaissée au milieu du tranchant.

6. Insert de coupe selon l'une des revendications 1 à 5, **caractérisé par le fait qu'**un premier élément à former le copeau (17) ayant une surface supérieure s'étendant à un angle de 0° à -20° est disposé sur le derrière du chanfrein élargi (15) sur l'ensemble de la longueur de celui-ci.

7. Insert de coupe selon la revendication 6, **caractérisé par le fait que** le premier élément à former le copeau (17) descend de part et d'autre via des flancs plans (20) vers la face de coupe (18) entourant cet élément à former le copeau, de préférence l'inclinaison (α₁) des flancs étant comprise entre 10° et 30°, et/ou que le premier élément à former le copeau (17) est disposé à symétrie spéculaire par rapport à la perpendiculaire (16) abaissée au milieu du tranchant.

8. Insert de coupe selon l'une des revendications 1 à 7, **caractérisé par** un plateau central élevé de face de coupe (12) qui est situé à distance de l'élévation la plus haute du tranchant et qui présente, à peu près au niveau de la perpendiculaire (16) abaissée au milieu du tranchant, à une distance du tranchant (10), une projection (13) en forme de nez qui, de préférence, se projette dans ledit premier élément à former le copeau (17) et/ou qui présente une surface supérieure plane pour l'essentiel triangulaire située dans le plan du plateau de la face de coupe, ladite surface supérieure présentant une pointe dirigée vers le tranchant (10) et ayant des lignes latérales contiguës à cette pointe à partir desquelles des flancs inclinés (21) s'étendent jusqu'à la face de coupe, de préférence à un angle de flanc compris entre 40° et 50°.

9. Insert de coupe selon l'une des revendications 1 à 8, **caractérisé par** une forme hexagonale pour l'essentiel régulière avec six tranchants qui limitent la face de coupe, de préférence avec deux faces de coupe disposées parallèlement l'une à l'autre, ou par une forme triangulaire ou quadrangulaire.

10. Insert de coupe selon l'une des revendications 1 à 9, **caractérisé par le fait que** le tranchant, dans une vue de dessus sur la face de dépouille y contiguë, est bombé de façon concave ou convexe ou est réalisé de manière rectiligne, le chanfrein élargi (15) suivant la configuration du tranchant.
